# EUROPEAN PATENT SPECIFICATION

(11) **EP 4 403 352 B1**
(45) Date of publication and mention of the grant of the patent: **01.01.2025**
(21) Application number: 23214589.6
(22) Date of filing: 06.12.2023
(51) Int. Cl.: B32B 7/023, B32B 27/20

(54) **DECORATIVE FILM, EXTERIOR PART FOR TRANSPORTATION EQUIPMENT, AND TRANSPORTATION EQUIPMENT**
DEKORFOLIE, AUSSENTEIL FÜR TRANSPORTEINRICHTUNG UND TRANSPORTEINRICHTUNG
FILM DÉCORATIF, PARTIE EXTÉRIEURE POUR ÉQUIPEMENT DE TRANSPORT, ET ÉQUIPEMENT DE TRANSPORT

(30) Priority: 20.01.2023 JP 2023007300
(43) Date of publication of application: 24.07.2024
(73) Proprietor: Yamaha Hatsudoki Kabushiki Kaisha, Iwata-shi, Shizuoka-ken 438-8501 (JP)
(72) Inventor: Matsumoto, Yasuhiko, Iwata-shi, Shizuoka-ken, 438-8501 (JP)
(74) Representative: Grünecker Patent- und Rechtsanwälte PartG mbB

(56) References cited:
- DE-T2- 69 017 273
- JP-A- 2005 305 424
- JP-A- 2005 329 614
- US-A1- 2022 410 210

## Description

The present invention relates to a decorative film, an exterior part for transportation equipment, and a transportation equipment.

A conventional technique to improve the chroma of a coating film is to decrease the grain size of the pigment contained in the film or to incorporate a glittering material of substantially the same hue as that of the pigment (i.e., of a similar color to that of the pigment) into the coating film. The latter technique is disclosed in, for example, JP 2016-1903385 A.

JP 2016-1903385 A relates to a method for forming a red-based multi-layer coating film on a coating subject having an electrodeposited coating film and an intermediate coating film formed thereon. The multi-layer coating film is formed by stacking a first colored coating film, a second colored coating film and a clear coating film on the coating subject. The first colored coating film contains a quinacridone pigment as an organic red pigment and also contains a red or yellowish red pigment formed of aluminum covered with iron oxide as a glittering pigment.

In the case where a pigment having a shorter grain size is used, the amount of the pigment needs to be increased in order to increase the concealability to a sufficiently high level (i.e., in order to prevent the underlayer from being seen through the coating film). This raises the costs of the materials. In the case where a glittering material is used, particularly in the case where aluminum powder or pearl (mica) powder generally used as the glittering material is used, a gray color appears. This improves the chroma but makes the coating subject cloudy. As can be seen, it is difficult to only improve the chroma. DE 690 17 273 T2 discloses a decorative film comprising a base layer containing at least one type of pigment defining a base colour and a transparent layer wherein the transparent layer contains a glittering material, wherein the colour of the glittering material and the pigment of the base layer are different, preferably complementary.

li is the object of the present invention made to provide a decorative film, an exterior part for transportation equipment, and a transportation equipment improved apparent chroma of a decorative film. According to the present invention said object is solved by a decorative film having the features of independent claim 1. Moreover, said object is also solved by an exterior part for transportation equipment according to claim 10 and a transportation equipment according to claim 11. Preferred embodiments are laid down in the dependent claims.

### BRIEF DESCRIPTION OF THE DRAWINGS

FIG. 1 is a cross-sectional view schematically showing a decorative film 100 according to an embodiment of the present teaching.
FIG. 2 is a chromaticity diagram of an L*a*b* color space.
FIG. 3 is a diagram showing the relationship among hue differences in a hue circle of the PCCS (Practical Color Coordinate System), with the yellow hue being the origin.
FIG. 4 is a graph plotting the chromaticity values (a* and b*) of a base color and a color of a glittering material for the case where the base color is blue.
FIG. 5 is a graph plotting the chromaticity values (a* and b*) of the base color and the color of the glittering material for the case where the base color is light blue.
FIG. 6 is a graph plotting the chromaticity values (a* and b*) of the base color and the color of the glittering material for the case where the base color is purple.
FIG. 7 is a graph plotting the chromaticity values (a* and b*) of the base color and the color of the glittering material for the case where the base color is dark blue.
FIG. 8 is a graph plotting the chromaticity values (a* and b*) of the base color and the color of the glittering material for the case where the base color is yellow green.
FIG. 9 is a graph plotting the chromaticity values (a* and b*) of the base color and the colors of the glittering materials for the case where the base color is yellow.
FIG. 10 is a graph plotting the chromaticity values (a* and b*) of the base color and the colors of the glittering materials for the case where the base color is green.
FIG. 11 shows an example of another structure of a transparent layer 20 included in the decorative film 100.
FIG. 12A is a cross-sectional view schematically showing a decorative film 100A according to an embodiment of the present teaching.
FIG. 12B is a cross-sectional view schematically showing a decorative film 100B according to an embodiment of the present teaching.
FIG. 13 is a left side view schematically showing a motorcycle 200.

### DETAILED DESCRIPTION

Hereinafter, embodiments of the present teaching will be described with reference to the drawings. The embodiments of the present teaching are not limited to the following embodiments.

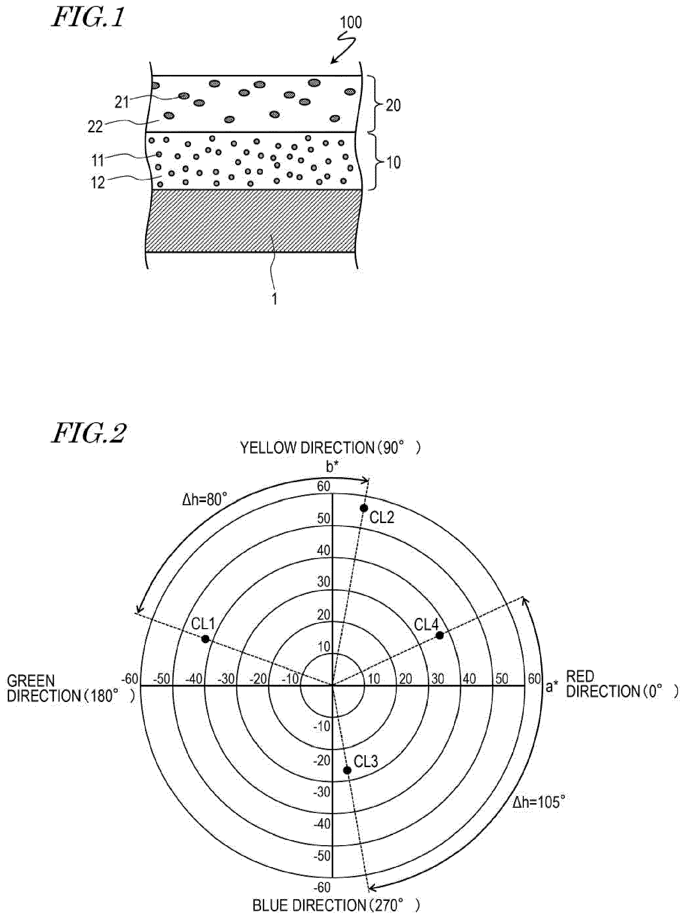

With reference to FIG. 1, a decorative film 100 according to an embodiment of the present teaching will be described. FIG. 1 is a cross-sectional view schematically showing the decorative film 100.

As shown in FIG. 1, the decorative film 100 is formed on a surface of a decoration subject 1. The decoration subject 1 may be any of various products, and may be, for example, a substrate of an exterior part of transportation equipment as described below. The decoration film 100 includes a base layer 10 and a transparent layer 20. In this embodiment, a case where the decoration film 100 is formed by coating, that is, a case where the decoration film 100 is a coating film will be described. The decoration film 100 may be formed by printing. That is, the decoration film 100 may be a printed film.

The base layer 10 contains a pigment 11 defining a base color. The pigment 11 is dispersed in a resin 12. The base color is a color acting as a basis of the color of the decorative film 100. The base color may be defined by one type of pigment 11 or by two or more types of pigments 11 having different colors from each other. That is, the base layer 10 contains at least one type of pigment 11.

The transparent layer 20 is provided on the opposite side to the decoration subject 1 with the base layer 10 being located between the transparent layer 20 and the decoration subject 1. The transparent layer 20 contains a glittering material 21. The glittering material 21 is dispersed in a resin 22. The transparent layer 20 is transparent as a whole, and transmits visible light (having a wavelength in the range of 360 nm to 830 nm). Therefore, the color of the base layer 10 is visible through the transparent layer 20. The transparent layer 20 has a visible light transmittance of, for example, 10% or higher, and preferably 25% or higher. The visible light transmittance of the transparent layer 20 does not have any specific upper limit, but is typically 80% or lower. The visible light transmittance may be measured by a spectrophotometer or a visible light transmittance/reflectance meter.

In the case where the decorative film 100 is formed by baking coating, the base layer 10 and the transparent layer 20 may each be formed by applying a paint composition (this process is referred to as "coating") and baking and thus drying the applied paint composition (this process is referred to as "baking"). The baking performed on the paint composition that is used to form the base layer 10 (hereinafter, may be referred to as a "first paint composition") and the baking performed on the paint composition that is used to form the transparent layer 20 (hereinafter, may be referred to as a "second paint composition") may be performed simultaneously (i.e., in the same step).

The first paint composition contains the pigment 11 and a vehicle. The pigment 11 may be any of various known pigments. The pigment 11 may be an inorganic pigment or an organic pigment. The vehicle contains a main agent (substrate resin), a curing agent and a solvent. As the main agent, any of various resin materials usable to form a coating film is usable. Specifically, an alkyd resin, polyester, an acrylic resin, an epoxy resin or the like is usable. As the curing agent, an amino resin, polyisocyanate or the like is usable. As the solvent, an organic solvent and/or water is usable.

The second paint composition contains a glittering material 21 and a vehicle. The glittering material (may be referred to as a "glittering pigment") 21 may be any of various known glittering materials. The glittering material 21 includes, for example, a substrate having a predetermined shape and a covering layer covering the substrate. The substrate may be formed of glass, aluminum, iron oxide, mica or the like. The substrate may have any of various shapes; the substrate may be, for example, flake-like, spherical, elliptical, quadrangular prism-shaped (not limited to regular quadrangular prism-shaped, needless to say), etc. The covering layer is formed of a metal material, a metal oxide (e.g., iron oxide, titanium oxide), or the like. The vehicle of the second paint composition contains a main agent, a curing agent and a solvent, like the vehicle of the first paint composition. As each of the main agent, the curing agent and the solvent, any of various materials described above regarding the vehicle of the first paint composition is usable, specifically.

The first paint composition and the second paint composition may each further contain an additive to improve characteristics of the coating film.

In the decorative film 100 according to an embodiment of the present teaching, the base color and the color of the glittering material 21 are different from each other in the hue. Specifically, a hue angle h1 of the base color and a hue angle h2 of the color of the glittering material 21 have a difference Δh of 60° or larger and 142° or smaller (preferably, 66° or larger and 132° or smaller). FIG. 2 is a chromaticity diagram of a L*a*b* color space. In the L*a*b* color space, the brightness is represented by L*, and the chromaticity values are represented by a* and b*. Referring to FIG. 2, the hue angle h is an angle represented with the red direction being the direction of 0° and the counterclockwise direction being the positive direction (that is, the yellow direction, the green direction and the blue direction are respectively the directions of 90°, 180° and 270°).

The difference Δh described above is not necessarily a simple arithmetic difference between the hue angle h1 of the base color and the hue angle h2 of the color of the glittering material 21, but has a value in the range of 0° or larger and 180° or smaller. Specifically, in the case where the difference between h1 and h2 has an absolute value |h1-h2| of 180° or smaller, Δh = |h1-h2|. In the case where the absolute value |h1-h2| of the difference between h1 and h2 is larger than 180°, Δh = 360° - |h1-h2|. For example, in the case of color CL1 (h = 160°) and CL2 (h = 80°) in FIG. 2, the difference Δh of the hue angles of these colors is 80°. By contrast, in the case of color CL3 (h = 280°) and color CL4 (h = 25°) in FIG. 2, the difference Δh of the hue angles of these colors is 105°.

As described above, the decorative film 100 according to an embodiment of the present teaching is provided based on a technological idea completely different from the conventional technological idea, that is, the base color and the color of the glittering material are to have substantially the same hue. In the case of the decorative film 100 according to an embodiment of the present teaching, the difference Δh between the hue angle h1 of the base color and the hue angle h2 of the color of the glittering material 21 is 60° or larger and 142° or smaller. This allows the decorative film 100 to be improved in the overall chroma perceived by humans (i.e., the apparent chroma), as described below with reference to inspection results. A mechanism by which such an effect is provided is presumed to be the following.

A perceptual phenomenon referred to as "color afterimage" is known. For example, when an observer observes a red paper sheet for several minutes and then looks at a white paper sheet, the observer observes a green afterimage on the white paper sheet. After observing a green paper sheet, the observer observes a red afterimage. After observing a yellow paper sheet, the observer observes a blue afterimage. After observing a blue paper sheet, the observer observes a yellow afterimage. In this manner, when an observer keeps looking at a certain color and then moves his/her line of sight to another item, an afterimage of the complementary color of the certain color appears on the another item. The color afterimage may be explained by a similar concept to that of so-called light adaptation and dark adaption. That is, it is considered that a visual system, after keeping on looking at a certain color and thus being adapted to the color, strongly perceives the complementary color of the certain color.

The decorative film 100 according to an embodiment of the present teaching includes the transparent layer 20, containing the glittering material 21 having a hue different from that of the base color, between the baser layer 10 and the observer. It is considered that this causes the observer to perceive the base color more strongly, resulting in improvement in the apparent chroma. Simply considered, it may be assumed that this effect is highest in the case where the color of the glittering material 21 is the complementary color of the base color (i.e., in the case where Δh is about 180°). It was found out that this is not the case but that the difference Δh between the hue angle h1 of the base color and the hue angle h2 of the color of the glittering material 21 is preferably 60° or larger and 142° or smaller.

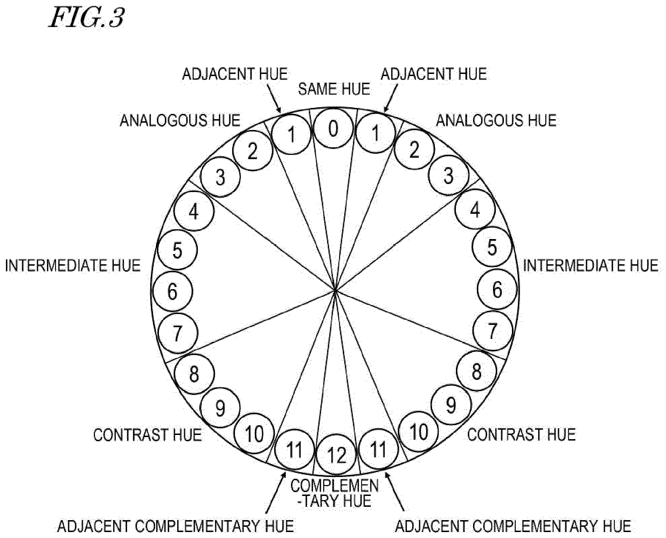

FIG. 3 is a diagram showing the relationship among hue differences in a hue circle of the PCCS (Practical Color Coordinate System), with the yellow hue being the origin. A hue difference of 1 corresponds to 15°, and each numbered circle (in the range of 15°) is of the same hue. Referring to the hue circle of the PCCS, in the case where the difference Δh between the hue angle h1 of the base color and the hue angle h2 of the color of the glittering material 21 is 60° or larger and 142° or smaller, the hue of the color of the glittering material 21 is considered to correspond to an intermediate hue or a contrast hue with respect to the hue of the base color. In the case where the hue of the color of the glittering material 21 is an adjacent hue or an analogous hue, it is difficult to provide the effect of improving the chroma. A conceivable reason for this is that the hue difference is small and therefore, a response of strongly perceiving the base color does not easily occur to the visual system. As described below with reference to the inspection results, also in the case where the hue of the color of the glittering material 21 is a complementary hue or an adjacent complementary hue, it is difficult to provide the effect of improving the chroma. A reason for this has not yet been clearly found out. However, one conceivable reason for this is that in the case where the hue difference is too large, a completely opposite signal is transmitted to the brain as a signal causing the perceptual response, which causes a certain type of confusion.

As can be seen from FIG. 3, the intermediate hue and the contrast hue to the hue as the origin are present both on the clockwise side and on the counterclockwise side with respect to the hue as the origin. With respect to the hue of the base color, the hue of the color of the glittering material 21 may be set to either the intermediate hue and the contrast hue on the clockwise side or the intermediate hue and the contrast hue on the counterclockwise side. The glittering material 21 of the hue corresponding to the intermediate hue or the contrast hue on the clockwise side, and the glittering material 21 of the hue corresponding to the intermediate hue or the contrast hue on the counterclockwise side may be mixed together.

From the point of view of the external appearance of the decorative film 100, it is preferred that the glittering material 21 has an average grain size of 50 µm or shorter. In the case where the average grain size of the glittering material 21 exceeds 50 µm, the glittering material 21 is visually recognized as spots, and thus the external appearance may undesirably be spoiled. In this specification, the average grain size of the glittering material 21 refers to the median diameter measured by the laser diffraction/scattering method. The average grain size of the glittering material 21 does not have any specific lower limit, but is, for example, 15 µm or longer.

From the point of view of enhancing the effect of improving the chroma, the transparent layer 20 contains the glittering material 21 at a content of, preferably 0.05 PHR or higher, and more preferably 0.3 PHR or higher. From the point of view of suppressing visual recognition of a pattern or suppressing significant deviation of the overall hue of the film from the hue of the base color, the content of the glittering material 21 is preferably 3.0 PHR or lower, and more preferably 1.0 PHR or lower.

In the case where the brightness (L*) of the base color is too high or too low, there is an undesirable possibility that the effect of improving the chroma may not be easily provided. The brightness of the base color is, for example, preferably 25 or higher and 75 or lower.

Now, the results of an inspection performed on the effect of improving the chroma according to an embodiment of the present teaching will be described. For the inspection, various samples were produced, and subjective evaluations on the samples were performed by visual observation. The subjective evaluations were performed as follows. A plurality of samples of several base colors, including a sample in which the transparent layer contained the glittering material and a sample in which the transparent layer did not contain the glittering material, were visually observed by six observers, and each of the observers voted for a sample having the highest chroma (the sample he/she perceived as being cleanest). The glittering material used was a glass flake substrate having a surface covered with a covering layer.

### [Base color: blue]

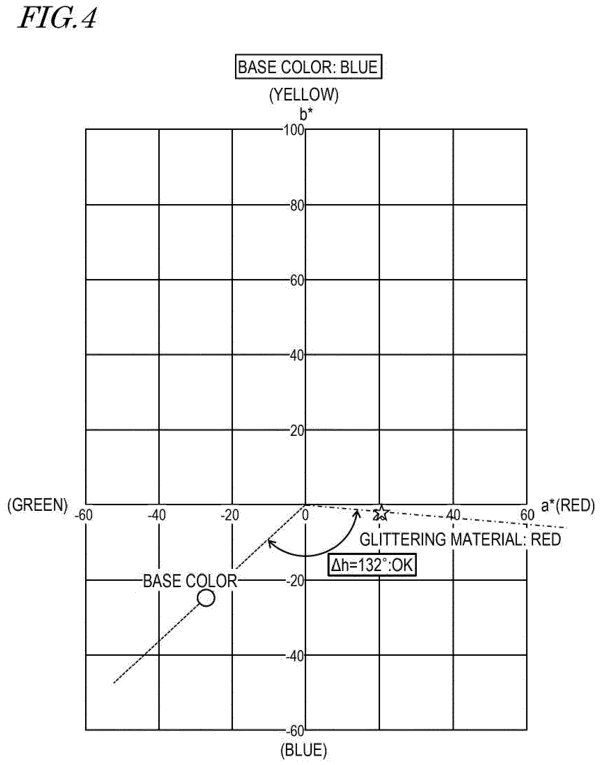

Table 1, Table 2 and FIG. 4 show the inspection results on samples in which the base color is blue. A sample 1A containing no glittering material and samples 1B containing a red glittering material were prepared. Two samples 1B having different contents of the glittering material were prepared (referred to as "1 B-1" and "1B-2"). The hue angle h1 of the base color was calculated from a* and b*, which were obtained by measuring the color of the sample 1A containing no glittering material by a spectrophotometer (CM-700d produced by Konica Minolta, Inc.). The hue angle h2 of the color of the glittering material was calculated from a* and b*, which were obtained by measuring the hue of a coating film, formed so as to contain a sufficient amount of glittering material, by the spectrophotometer. The hue angles h1 and h2 of the samples described below were obtained in substantially the same manner. FIG. 4 is a graph plotting the chromaticity values (a* and b*) of the base color and the color of the glittering material.

**[Table 1]**

| BASE COLOR: BLUE | | | | | | | | | |
|---|---|---|---|---|---|---|---|---|---|
| SAMPLE | | GLITTERING MATERIAL | | | | BASE COLOR HUE ANGLE h₁ | HUE ANGLE DIFFERENCE Δh | NUMBER OF VOTES | |
| | | PRESENT/ ABSENT | COLOR, AVERAGE GRAIN SIZE | CONTE NT | HUE ANGLE h₂ | | | | |
| 1A | | ABSENT | - | - | - | 223° | - | 1 | |
| 1 B | 1B-1 | PRESENT | RED, 30µm | 0.3PHR | 355° | | 132° | 2 | 5 |
| | 1B-2 | | | 1.0PHR | | | | 3 | |

**[Table 2]**

| BASE COLOR: BLUE | | | | | | | | |
|---|---|---|---|---|---|---|---|---|
| SAMPLE | | COLOR OF SAMPLE | | | COLOR DIFFERENCE FROM SAMPLE WITH NO GLITTERING MATERIAL | | | |
| | | L* | a* | b* | ΔL* | Δa* | Δb* | ΔE* |
| 1A | | 43.47 | -27.13 | -24.77 | - | | | |
| 1B | 1B-1 | 43.57 | -26.84 | -24.78 | 0.1 | 0.29 | -0.01 | 0.31 |
| | 1B-2 | 43.72 | -26.13 | -24.77 | 0.25 | 1 | 0 | 1.03 |

As can be seen from Table 1 and FIG. 4, in this example, the difference Δh between the hue angle h1 of the base color and the hue angle h2 of the color of the glittering material is 132°, and the number of votes for the samples 1B with the glittering material is larger than the number of votes for the sample 1A without the glittering material. As can be seen from Table 2, each of the samples 1B contains the glittering material having a hue different from that of the base color, but the color difference ΔE* thereof from that of the sample 1A is small. This indicates that the sample 1A and each of the samples 1B are not much different from each other in the colorimetric value but the samples 1B are perceived to be improved in the chroma over the sample 1A.

### [Base color: light blue]

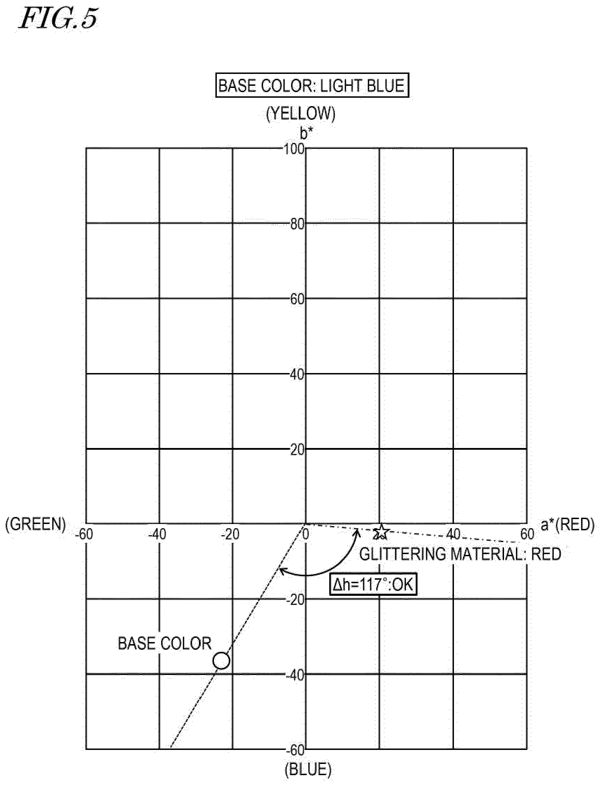

Table 3, Table 4 and FIG. 5 show the inspection results on samples in which the base color is light blue. A sample 2A containing no glittering material and samples 2B containing a red glittering material were prepared. Two samples 2B having different contents of the glittering material were prepared (referred to as "2B-1" and "2B-2").

**[Table 3]**

| BASE COLOR: LIGHT BLUE | | | | | | | | | |
|---|---|---|---|---|---|---|---|---|---|
| SAMPLE | | GLITTERING MATERIAL | | | | BASE COLOR HUE ANGLE h₁ | HUE ANGLE DIFFERENCE Δh | NUMBER OF VOTES | |
| | | PRESENT/ ABSENT | COLOR, AVERAGE GRAIN SIZE | CONTENT | HUE ANGLE h₂ | | | | |
| 2A | | ABSENT | - | - | - | 238° | - | 0 | |
| 2B | 2B-1 | PRESENT | RED, 30µm | 0.3PHR | 355° | | 117° | 4 | 6 |
| | 2B-2 | | | 1.0PHR | | | | 2 | |

**[Table 4]**

| BASE COLOR: LIGHT BLUE | | | | | | | | |
|---|---|---|---|---|---|---|---|---|
| SAMPLE | | COLOR OF SAMPLE | | | COLOR DIFFERENCE FROM SAMPLE WITH NO GLITTERING MATERIAL | | | |
| | | L* | a* | b* | ΔL* | Δa* | Δb* | ΔE* |
| 2A | | 61.27 | -23.17 | -36.54 | - | | | |
| 2B | 2B-1 | 61.59 | -22.91 | -36.18 | 0.32 | 0.26 | 0.36 | 0.55 |
| | 2B-2 | 60.6 | -22.83 | -37.1 | -0.67 | 0.34 | -0.56 | 0.94 |

As can be seen from Table 3 and FIG. 5, in this example, the difference Δh between the hue angle h1 of the base color and the hue angle h2 of the color of the glittering material is 117°, and the number of votes for the samples 2B with the glittering material is larger than the number of votes for the sample 2A without the glittering material. As can be seen from Table 4, the color difference ΔE* between each of the samples 2B and the sample 2A is small.

### [Base color: purple]

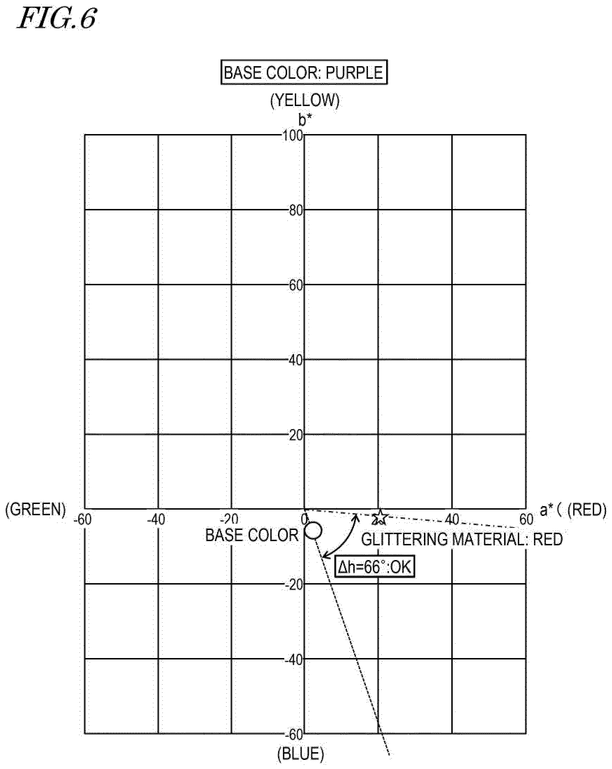

Table 5, Table 6 and FIG. 6 show the inspection results on samples in which the base color is purple. A sample 3A containing no glittering material and samples 3B containing a red glittering material were prepared. Two samples 3B having different contents of the glittering material were prepared (referred to as "3B-1" and "3B-2").

**[Table 5]**

| BASE COLOR: PURPLE | | | | | | | | | |
|---|---|---|---|---|---|---|---|---|---|
| SAMPLE | | GLITTERING MATERIAL | | | | BASE COLOR HUE ANGLE h₁ | HUE ANGLE DIFFERENCE Δh | NUMBER OF VOTES | |
| | | PRESENT / ABSENT | COLOR, AVERAGE GRAIN SIZE | CONTE NT | HUE ANGLE h₂ | | | | |
| 3A | | ABSENT | - | - | - | 289° | - | 0 | |
| 3 B | 3B-1 | PRESENT | RED, 30µm | 0.3PHR | 355° | | 66° | 0 | 6 |
| | 3B-2 | | | 1.0PHR | | | | 6 | |

**[Table 6]**

| BASE COLOR: PURPLE | | | | | | | | |
|---|---|---|---|---|---|---|---|---|
| SAMPLE | | COLOR OF SAMPLE | | | COLOR DIFFERENCE FROM SAMPLE WITH NO GLITTERING MATERIAL | | | |
| | | L* | a* | b* | ΔL* | Δa* | Δb* | ΔE* |
| 3A | | 25.63 | 1.08 | -5.81 | - | | | |
| 3B | 3B-1 | 25.75 | 0.99 | -6.22 | 0.12 | -0.09 | -0.41 | 0.44 |
| | 3B-2 | 25.81 | 1.57 | -7.02 | 0.18 | 0.49 | -1.21 | 1.32 |

As can be seen from Table 5 and FIG. 6, in this example, the difference Δh between the hue angle h1 of the base color and the hue angle h2 of the color of the glittering material is 66°, and the number of votes for the samples 3B with the glittering material is larger than the number of votes for the sample 3A without the glittering material. As can be seen from Table 6, the color difference ΔE* between each of the samples 3B and the sample 3A is small.

### [Base color: navy blue]

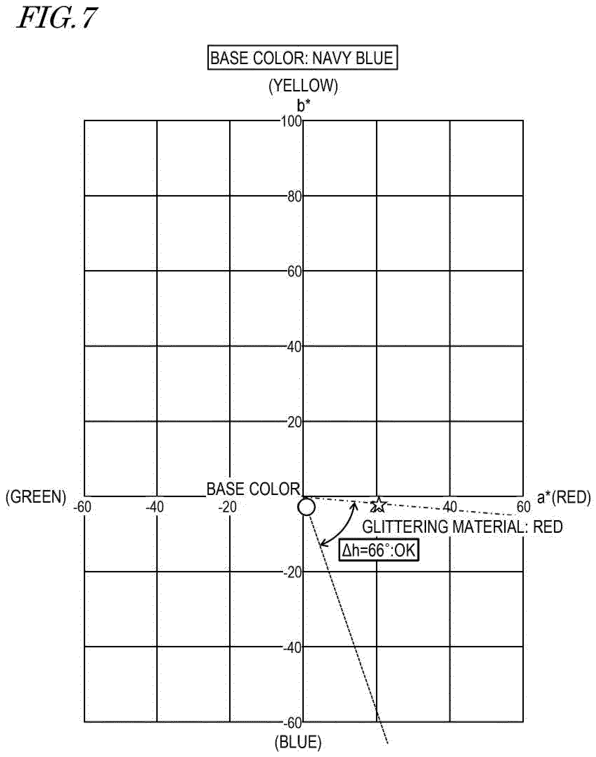

Table 7, Table 8 and FIG. 7 show the inspection results on samples in which the base color is navy blue. A sample 4A containing no glittering material and samples 4B containing a red glittering material were prepared. Two samples 4B having different contents of the glittering material were prepared (referred to as "4B-1" and "4B-2").

**[Table 7]**

| BASE COLOR: DARK BLUE | | | | | | | | | |
|---|---|---|---|---|---|---|---|---|---|
| SAMPLE | | GLITTERING MATERIAL | | | | BASE COLOR HUE ANGLE h₁ | HUE ANGLE DIFFERENCE Δh | NUMBER OF VOTES | |
| | | PRESENT/ ABSENT | COLOR, AVERAGE GRAIN SIZE | CONTENT | HUE ANGLE h₂ | | | | |
| 4A | | ABSENT | - | - | - | 289° | - | 0 | |
| 4B | 4B-1 | PRESENT | RED, 30µm | 0.3PHR | 355° | | 66° | 1 | 6 |
| | 4B-2 | | | 1.0PHR | | | | 5 | |

**[Table 8]**

| BASE COLOR: DARK BLUE | | | | | | | | |
|---|---|---|---|---|---|---|---|---|
| SAMPLE | | COLOR OF SAMPLE | | | COLOR DIFFERENCE FROM SAMPLE WITH NO GLITTERING MATERIAL | | | |
| | | L* | a* | b* | ΔL* | Δa* | Δb* | ΔE* |
| 4A | | 25.18 | 0.95 | -2.8 | - | | | |
| 4B | 4B-1 | 25.25 | 1.18 | -3.34 | 0.07 | 0.23 | -0.54 | 0.59 |
| | 4B-2 | 25.38 | 1.54 | -4.39 | 0.2 | 0.59 | -1.59 | 1.71 |

As can be seen from Table 7 and FIG. 7, in this example, the difference Δh between the hue angle h1 of the base color and the hue angle h2 of the color of the glittering material is 66°, and the number of votes for the samples 4B with the glittering material is larger than the number of votes for the sample 4A without the glittering material. As can be seen from Table 8, the color difference ΔE* between each of the samples 4B and the sample 4A is small.

### [Base color: yellow green]

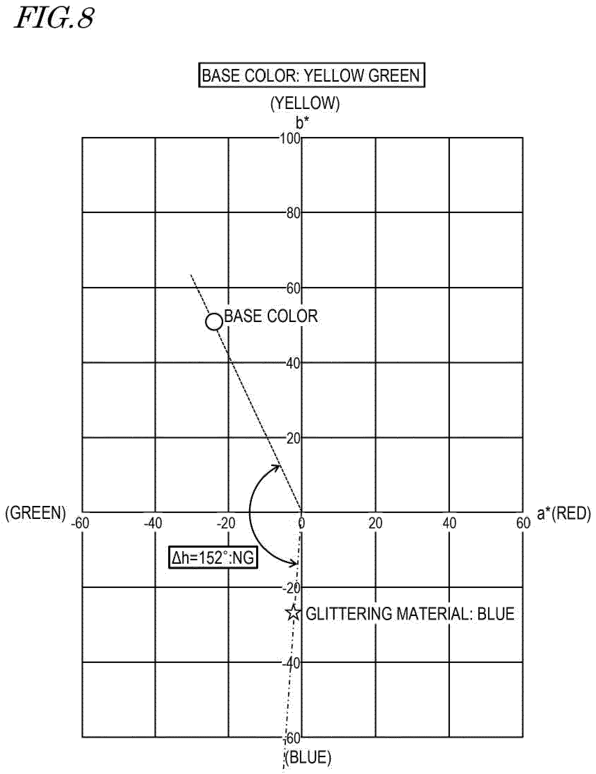

Table 9, Table 10 and FIG. 8 show the inspection results on samples in which the base color is yellow green. A sample 5A containing no glittering material and a sample 5B containing a blue glittering material were prepared.

**[Table 9]**

| BASE COLOR: YELLOW GREEN | | | | | | | |
|---|---|---|---|---|---|---|---|
| SAMPLE | GLITTERING MATERIAL | | | | BASE COLOR HUE ANGLE h₁ | HUE ANGLE DIFFERENCE Δh | NUMBER OF VOTES |
| | PRESENT/ ABSENT | COLOR, AVERAGE GRAIN SIZE | CONTENT | HUE ANGLE h₂ | | | |
| 5A | ABSENT | - | - | - | 115° | - | 4 |
| 5B | PRESENT | BLUE, 30µm | 0.3PHR | 267° | | 152° | 2 |

**[Table 10]**

| BASE COLOR: YELLOW GREEN | | | | | | | |
|---|---|---|---|---|---|---|---|
| SAMPLE | COLOR OF SAMPLE | | | COLOR DIFFERENCE FROM SAMPLE WITH NO GLITTERING MATERIAL | | | |
| | L* | a* | b* | ΔL* | Δa* | Δb* | ΔE* |
| 5A | 74.38 | -23.59 | 50.55 | - | | | |
| 5B | 74.45 | -23.68 | 50.42 | 0.07 | -0.09 | -0.13 | 0.17 |

As can be seen from Table 9 and FIG. 8, in this example, the difference Δh between the hue angle h1 of the base color and the hue angle h2 of the color of the glittering material is 152°, and the number of votes for the sample 5B with the glittering material is smaller than the number of votes for the sample 5A without the glittering material. As can be seen from Table 10, the color difference ΔE* between the sample 5B and the sample 5A is small.

### [Base color: yellow]

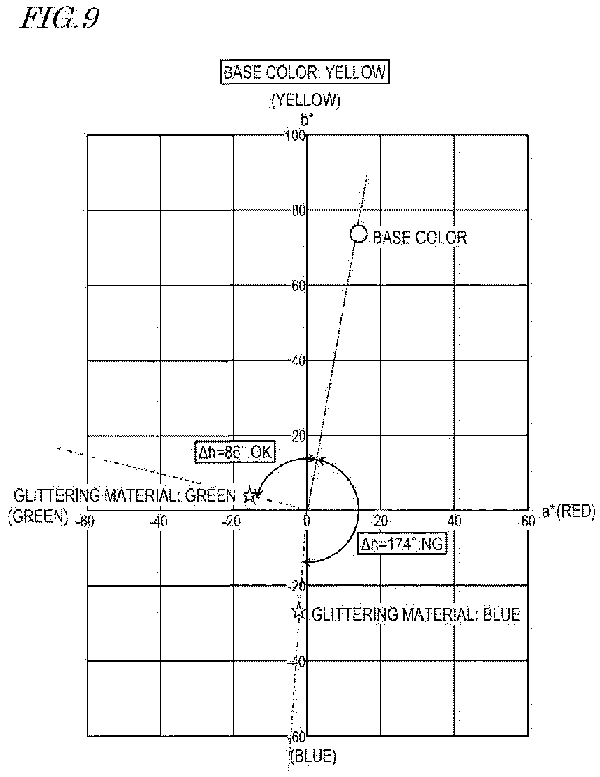

Table 11, Table 12 and FIG. 9 show the inspection results on samples in which the base color is yellow. A sample 6A containing no glittering material, samples 6B containing a blue glittering material, and samples 6C containing a green glittering material were prepared. Two samples 6B having different contents of the glittering material, and two samples 6C having different contents of the glittering material were prepared (referred to as "6B-1", "6B-2", "6C-1" and "6C-2").

**[Table 11]**

| BASE COLOR: YELLOW | | | | | | | | | |
|---|---|---|---|---|---|---|---|---|---|
| SAMPLE | | GLITTERING MATERIAL | | | | BASE COLOR HUE ANGLE h₁ | HUE ANGLE DIFFERENCE Δh | NUMBER OF VOTES | |
| | | PRESENT/ ABSENT | COLOR, AVERAGE GRAIN SIZE | CONTENT | HUE ANGLE h₂ | | | | |
| 6A | | ABSENT | - | - | - | 81° | - | 1 | |
| 6B | 6B-1 | PRESENT | BLUE, 30µm | 0.3PHR | 267° | | 174° | 0 | 0 |
| | 6B-2 | | | 1.0PHR | | | | 0 | |
| 6C | 6C-1 | PRESENT | GREEN, 30µm | 0.3PHR | 167° | | 86° | 2 | 5 |
| | 6C-2 | | | 1.0PHR | | | | 3 | |

**[Table 12]**

| BASE COLOR: YELLOW | | | | | | | | |
|---|---|---|---|---|---|---|---|---|
| SAMPLE | | COLOR OF SAMPLE | | | COLOR DIFFERENCE FROM SAMPLE WITH NO GLITTERING MATERIAL | | | |
| | | L* | a* | b* | ΔL* | Δa* | Δb* | ΔE* |
| 6A | | 74.02 | 14.11 | 73.48 | - | | | |
| 6B | 6B-1 | 73.68 | 14.42 | 73.16 | -0.34 | 0.31 | -0.32 | 0.56 |
| | 6B-2 | 73.65 | 14.37 | 72.44 | -0.38 | 0.26 | -1.04 | 1.14 |
| 6C | 6C-1 | 73.84 | 14.49 | 73.95 | -0.19 | 0.38 | 0.47 | 0.64 |
| | 6C-2 | 73.91 | 13.93 | 72.53 | -0.12 | -0.17 | -0.95 | 0.97 |

As can be seen from Table 11 and FIG. 9, in the samples 6B containing the blue glittering material, the difference Δh between the hue angle h1 of the base color and the hue angle h2 of the color of the glittering material is 174°; whereas in the samples 6C containing the green glittering material, the difference Δh between the hue angle h1 of the base color and the hue angle h2 of the color of the glittering material is 86°. The number of votes for the samples 6C with the green glittering material is larger than the number of votes for the sample 6A without the glittering material, whereas the number of votes for the samples 6B with the blue glittering material is smaller than the number of votes for the sample 6A without the glittering material. As can be seen from Table 12, the color difference ΔE* among the sample 6A, each of the samples 6B and each of the samples 6C is small.

### [Base color: green]

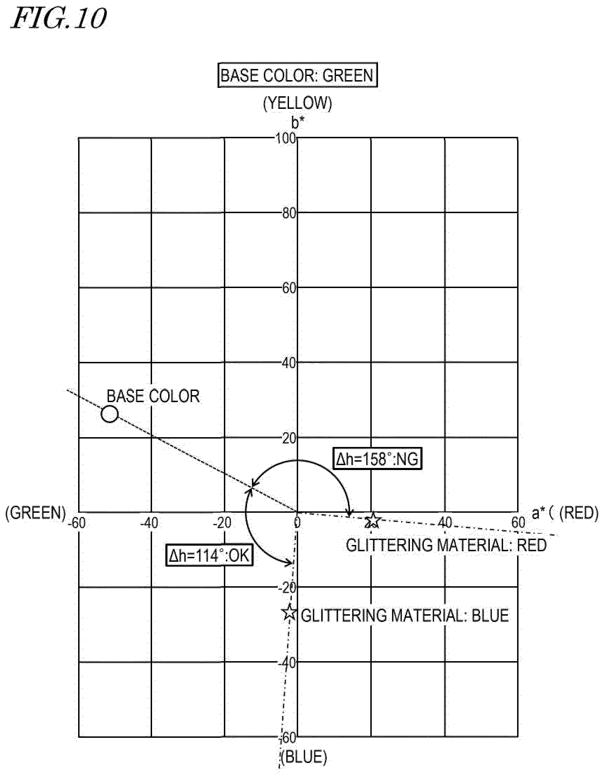

Table 13, Table 14 and FIG. 10 show the inspection results on samples in which the base color is green. A sample 7A containing no glittering material, a sample 7B containing a red glittering material, and samples 7C containing a blue glittering material were prepared. Two samples 7C having different contents of the glittering material were prepared (referred to as "7C-1" and "7C-2").

**[Table 13]**

| BASE COLOR: GREEN | | | | | | | | | |
|---|---|---|---|---|---|---|---|---|---|
| SAMPLE | | GLITTERING MATERIAL | | | | BASE COLOR HUE ANGLE h₁ | HUE ANGLE DIFFERENCE Δh | NUMBER OF VOTES | |
| | | PRESENT/ ABSENT | COLOR, AVERAGE GRAIN SIZE | CONTENT | HUE ANGLE h₂ | | | | |
| 7A | | ABSENT | - | - | - | 153° | - | 1 | |
| 7B | | PRESENT | RED, 30µm | 0.3PHR | 355° | | 158° | 1 | |
| 7C | 7C-1 | PRESENT | BLUE, 30µm | 0.3PHR | 267° | | 114° | 4 | 4 |
| | 7C-2 | | BLUE, 18µm | | | | | 0 | |

**[Table 14]**

| BASE COLOR: GREEN | | | | | | | | |
|---|---|---|---|---|---|---|---|---|
| SAMPLE | | COLOR OF SAMPLE | | | COLOR DIFFERENCE FROM SAMPLE WITH NO GLITTERING MATERIAL | | | |
| | | L* | a* | b* | ΔL* | Δa* | Δb* | Δ E* |
| 7A | | 60.57 | -51.50 | 26.31 | - | | | |
| 7B | | 60.90 | -50.56 | 25.65 | 0.33 | 0.94 | -0.66 | 1.20 |
| 7C | 7C-1 | 60.78 | -50.91 | 25.60 | 0.20 | 0.59 | -0.71 | 0.94 |
| | 7C-2 | 60.62 | -51.39 | 25.87 | 0.05 | 0.11 | -0.44 | 0.46 |

As can be seen from Table 13 and FIG. 10, in the sample 7B containing the red glittering material, the difference Δh between the hue angle h1 of the base color and the hue angle h2 of the color of the glittering material is 158°; whereas in the samples 7C containing the blue glittering material, the difference Δh between the hue angle h1 of the base color and the hue angle h2 of the color of the glittering material is 114°. The number of votes for the samples 7C with the blue glittering material is larger than the number of votes for the sample 7A without the glittering material, whereas the number of votes for the sample 7B with the red glittering material is the same as the number of votes for the sample 7A without the glittering material. As can be seen from Table 14, the color difference ΔE* among the sample 7A, the sample 7B and each of the samples 6C is small.

As can be understood from the above-described inspection results, the difference Δh, between the hue angle h1 of the base color and the hue angle h2 of the color of the glittering material 21, of 60° or larger and 142° or smaller improves the overall chroma of the decorative film 100 perceived by humans (i.e., the apparent chroma). The lower limit of Δh is preferably 66°. The upper limit of Δh is preferably 132°.

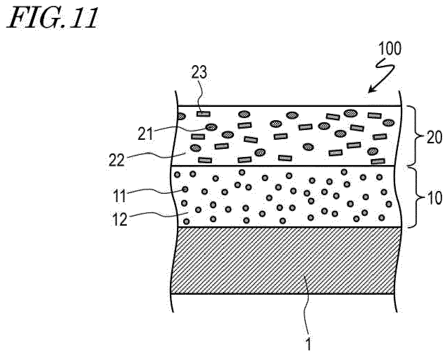

FIG. 11 shows an example of another structure of the transparent layer 20. In the example shown in FIG. 11, the transparent layer 20 includes another glittering material 23 having a different color from that of the glittering material 21. Hereinafter, the glittering material 21 will be referred to as a "first glittering material", and the glittering material 23 will be referred to as a "second glittering material". A difference Δh' between the hue angle h1 of the base color and a hue angle h3 of the color of the second glittering material 23 is smaller than 60°. That is, the hue of the second glittering material 23 may be the same hue as that of, or an adjacent hue or an analogous hue to that of, the base color. Even in the case where the structure shown in FIG. 11 is adopted, substantially the same effect is provided as long as the difference Δh between the hue angle h1 of the base color and the hue angle h2 of the color of the first glittering material 21 is 60° or larger and 142° or smaller. The content of the second glittering material 23 in the transparent layer 20 is, for example, 0.1 PHR or higher and 30 PHR or lower.

The above description shows a case where the decorative film 100 has a two-layer structure. The decorative film according to an embodiment of the present teaching is not limited to having a two-layer structure, but may have a stack structure including three or more layers. Specifically, there may be one transparent layer 20 or two or more transparent layers 20. In the case where there are two or more transparent layers 20, it is sufficient that a certain transparent layer among the two or more transparent layers 20 contains the glittering material 21. The visible light transmittance of each of the transparent layers 20 is, for example, 10% or higher.

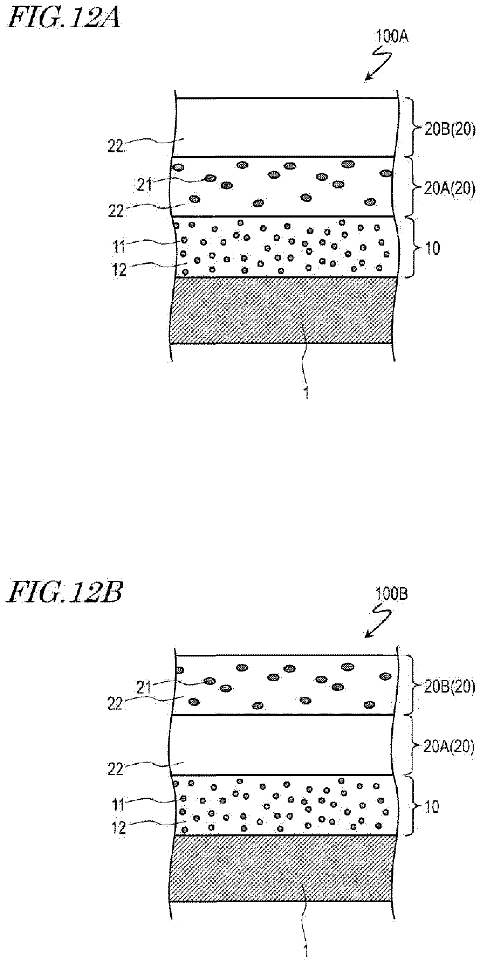

FIG. 12A and FIG. 12B respectively show decorative films 100A and 100B each including two transparent layers 20. As shown in FIG. 12A and FIG. 12B, the decorative films 100A and 100B each include a first transparent layer 20A and a second transparent layer 20B provided on the opposite side to the base layer 10 with the first transparent layer 20A being located between the second transparent layer 20B and the base layer 10. That is, the first transparent layer 20A and the second transparent layer 20B are stacked in this order on the base layer 10.

In the decorative film 100A, the first transparent layer 20A, among the first transparent layer 20A and the second transparent layer 20B, contains the glittering material 21. That is, the transparent layer 20 containing the glittering material 21 (i.e., the first transparent layer 20A) is located between the transparent layer 20 not containing the glittering material 21 (i.e., the second transparent layer 20B) and the base layer 10. By contrast, in the decorative film 100B, the second transparent layer 20B, among the first transparent layer 20A and the second transparent layer 20B, contains the glittering material 21. That is, the transparent layer 20 not containing the glittering material 21 (i.e., the first transparent layer 20A) is located between the transparent layer 20 containing the glittering material 21 (i.e., the second transparent layer 20B) and the base layer 10. In the decorative film 100A, the second transparent layer 20B located as the upper layer does not contain the glittering material 21. Therefore, the second transparent layer 20B is improved in the smoothness and the leveling, and thus is advantageous to increase the glossiness. In the decorative film 100B, the second transparent layer 20B located as the upper layer contains the glittering material 21. Therefore, the amount of light that reaches the glittering material 21 and is reflected by the glittering material 21 is increased. This is advantageous to enhance the effect of improving the chroma and to decrease the content of the glittering material 21.

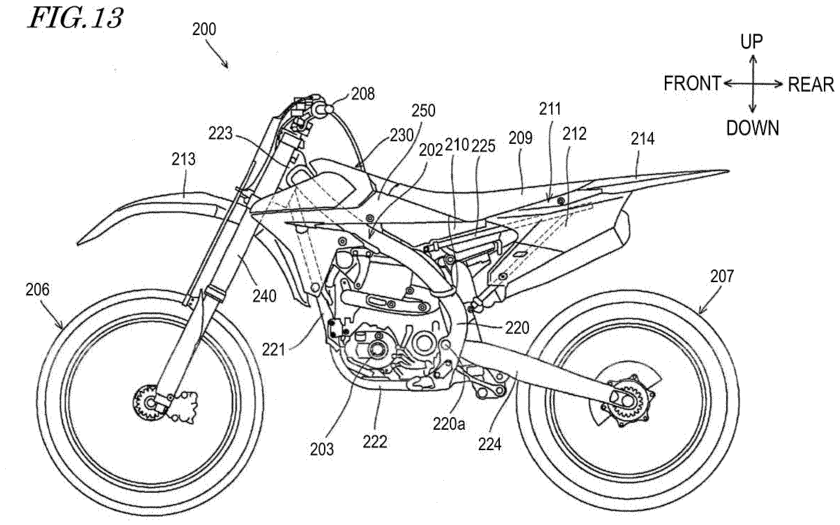

The decorative film 100 (or 100A or 100B) according to an embodiment of the present teaching is preferably usable to, for example, decorate an exterior part of transportation equipment as described above. FIG. 13 shows an example of transportation equipment including such an exterior part. FIG. 13 shows a motorcycle 200 as an example. However, the transportation equipment is not limited to a motorcycle, but may be a vehicle that changes the traveling direction by inclining the body thereof, such as a leaning multi-wheel (LMW), an all-terrain vehicle (ATV), a personal watercraft, a snowmobile or the like.

The motorcycle 200 shown in FIG. 13 includes a vehicle frame 202, a front wheel 206 and a rear wheel 207. The vehicle frame 202 supports an engine 203, a handle 208, a seat 209 and a fuel tank 210.

The vehicle frame 202 includes a pair of main frames 220, a down frame 221, a pair of lower frames 222, a head pipe 223, a pair of rear arms 224, and a seat rail 225. The head pipe 223 is located in a front portion of the motorcycle 200. The main frames 220 extend rearward and downward obliquely from the head pipe 223. The down frame 221 is located below the main frames 220, and extends rearward and downward obliquely from the head pipe 223. The lower frames 222 connect a bottom end of the down frame 221 and bottom ends of the main frames 220 to each other. The seat rail 225 extends rearward from the main frames 220.

The engine 203 is located below the main frames 220 and to the rear of the down frame 221. An air cleaner 230 is located to the rear of the head pipe 223. A seat 209 supported by the seal rail 225 is located to the rear of the air cleaner 230 and above the main frames 220. The fuel tank 210 is located below a front portion of the seat 209.

A steering shaft (not shown) is inserted into the head pipe 223, and the handle 208 is connected to a top portion of the steering shaft. A pair of front forks 240 are located to the side of the steering shaft. The front wheel 206 is rotatably attached to bottom ends of the front forks 240.

Pivot shafts 220a are provided in rear portions of the main frames 220. Front portions of the rear arms 224 are supported by the pivot shafts 220a. The rear arms 224 are swingable up and down, by the pivot shafts 220a, with respect to the main frames 220. The rear wheel 207 is rotatably attached to rear ends of the rear arms 224.

The vehicle frame 202 supports an exterior cover 211 covering a portion of the vehicle frame 202. The exterior cover 211 includes a pair of front side covers 250, a pair of rear side covers 212, a front fender 213 and a rear fender 214. The front side covers 250 are located below the front portion of the seat 209, and are supported by the main frames 220 and a top portion of the down frame 221. The rear side covers 212 are located below a rear portion of the seat 209, and are supported by the seat rail 225. The front fender 213 is located above the front wheel 206, and is supported by the front forks 240. The rear fender 214 is located above the rear wheel 207, and is supported by the seat rail 225.

The decorative film 100 (or 100A or 100B) according to an embodiment of the present teaching is preferably usable to decorate the exterior cover 211 of the motorcycle 200.

As described above, the decorative film 100 (or 100A or 100B) according to an embodiment of the present teaching includes the base layer 10 containing at least one type of pigment 11 defining a base color, and at least one transparent layer 20 located on the opposite side to the decoration subject 1 with the base layer 10 being located between the at least one transparent layer 20 and the decoration subject 1. A certain transparent layer 20 among the at least one transparent layer 20 contains the glittering material 21. The difference Δh between the hue angle h1 of the base color and the hue angle h2 of the color of the glittering material 21 is 60° or larger and 142° or smaller.

The decorative film 100 according to an embodiment of the present teaching includes the base layer 10 containing the pigment 11 defining the base color, and at least one transparent layer 20 located on the opposite side to the decoration subject 1 with the base layer 10 being located between the at least one transparent layer 20 and the decoration subject 1. A certain transparent layer 20 among the at least one transparent layer 20 contains the glittering material 21. In the decorative film 100 according to an embodiment of the present teaching, the difference Δh, between the hue angle h1 of the base color and the hue angle h2 of the color of the glittering material 21, of 60° or larger and 142° or smaller improves the overall chroma of the film perceived by humans (i.e., the apparent chroma).

In an embodiment, the glittering material 21 has an average grain size of 50 µm or shorter.

The average grain size of the glittering material 21 is preferably 50 µm or shorter. In the case where the average grain size of the glittering material 21 exceeds 50 µm, the glittering material 21 is visually recognized as spots, and thus the external appearance may undesirably be spoiled.

In an embodiment, the certain transparent layer 20 contains the glittering material 21 at a content of 0.05 PHR or higher and 3.0 PHR or lower.

From the point of view of enhancing the effect of improving the chroma, the content of the glittering material 21 is preferably 0.05 PHR or higher. From the point of view of suppressing visual recognition of a pattern or suppressing significant deviation of the overall hue of the film from the hue of the base color, the content of the glittering material 21 is preferably 3.0 PHR or lower.

In an embodiment, the certain transparent layer 20 contains the glittering material 21 at a content of 0.3 PHR or higher and 1.0 PHR or lower.

From the point of view of enhancing the effect of improving the chroma, the content of the glittering material 21 is more preferably 0.3 PHR or higher. From the point of view of suppressing visual recognition of the pattern or suppressing significant deviation of the overall hue of the film from the hue of the base color, the content of the glittering material 21 is more preferably 1.0 PHR or lower.

In an embodiment, the at least one transparent layer 20 includes two transparent layers 20.

The decorative film 100 according to an embodiment of the present teaching is not limited to having a two-layer structure, but may have a stack structure including three or more layers. That is, there may be one transparent layer 20 or two or more transparent layers 20. In the case where there are two transparent layers 20, the transparent layer 20 containing the glittering material 21 may be located between the transparent layer 20 not containing the glittering material 21 and the base layer 10, or the transparent layer 20 not containing the glittering material 21 may be located between the transparent layer 20 containing the glittering material 21 and the base layer 10.

In an embodiment, the transparent layer 20A containing the glittering material 21, among the two transparent layers 20A and 20B, is located between the transparent layer 20B not containing the glittering material 21 and the base layer 10.

In the case where the transparent layer 20A containing the glittering material 21 is located between the transparent layer 20B not containing the glittering material 21 and the base layer 10, the transparent layer 20B located as the upper layer does not contain the glittering material 21. Therefore, the transparent layer 20B located as the upper layer is improved in the smoothness and the leveling, and thus is advantageous to increase the glossiness.

In an embodiment, the transparent layer 20A not containing the glittering material 21, among the two transparent layers 20A and 20B, is located between the transparent layer 20B containing the glittering material 21 and the base layer 10.

In the case where the transparent layer 20A not containing the glittering material 21 is located between the transparent layer 20B containing the glittering material 21 and the base layer 10, the transparent layer 20B located as the upper layer contains the glittering material 21. Therefore, the amount of light that reaches the glittering material 21 and is reflected by the glittering material 21 is increased. This is advantageous to enhance the effect of improving the chroma and to decrease the content of the glittering material 21.

In an embodiment, each of the at least one transparent layer 20 has a visible light transmittance of 10% or higher.

The visible light transmittance of the transparent layer 20 is, for example, 10% or higher.

An exterior part for transportation equipment according to an embodiment of the present teaching includes a substrate, and the decorative film 100 having any one of the above-described structures and located on a surface of the substrate.

The decorative film 100 according to an embodiment of the present teaching is preferably usable to decorate an exterior part for transportation equipment.

Transportation equipment according to an embodiment of the present teaching includes the exterior part, for transportation equipment, having the above-described structure.

According to an embodiment of the present teaching, the apparent chroma of the decorative film is preferably improved. The decorative film according to an embodiment of the present teaching is preferably usable to decorate various types of products.

## Claims

1. A decorative film (100, 100A, 100B) configured to be provided on a decoration subject (1), comprising:
a base layer (10) containing at least one type of pigment (11) defining a base color;
the base layer (10) is configured to be provided on a surface of the decoration subject (1), and
at least one transparent layer (20, 20A, 20B) with the base layer (10) being located between the at least one transparent layer (20, 20A, 20B) and the decoration subject (1),
wherein the transparent layer (20, 20A, 20B) contains a glittering material (21, 23), and a difference (Δh, Δh') between a hue angle (h1) of the base color and a hue angle (h2, h3) of a color of the glittering material (21, 23) is 60° or larger and 142° or smaller.

2. The decorative film (100, 100A, 100B) according to claim 1, wherein the glittering material (21, 23) has an average grain size of 50 µm or shorter.

3. The decorative film (100, 100A, 100B) according to claim 1 or 2, wherein the transparent layer (20, 20A, 20B) contains the glittering material (21, 23) at a content of 0.05 PHR or higher and 3.0 PHR or lower.

4. The decorative film (100, 100A, 100B) according to claim 1 or 2, wherein the transparent layer (20, 20A, 20B) contains the glittering material (21, 23) at a content of 0.3 PHR or higher and 1.0 PHR or lower.

5. The decorative film (100A, 100B) according to any one of claims 1 to 4, wherein the at least one transparent layer includes two transparent layers (20A, 20B).

6. The decorative film (100A, 100B) according to claim 5, wherein the two transparent layers (20A, 20B) comprises a first transparent layer (20A) and a second the transparent layer (20B) stacked on the base layer (10).

7. The decorative film (100A) according to claim 6, wherein the first transparent layer (20A) contains the glittering material (21, 23) and is located between the second transparent layer (20B) and the base layer (10), the second transparent layer (20B) does not contain glittering material (21, 23).

8. The decorative film (100B) according to claim 6, wherein the first transparent layer (20A) does not contain glittering material (21, 23) and is located between the second transparent layer (20B) and the base layer (10), the second transparent layer (20B) contains the glittering material (21, 23).

9. The decorative film (100, 100A, 100B) according to any one of claims 1 to 8, wherein each of the at least one transparent layer (20, 20A, 20B) has a visible light transmittance of 10% or higher.

10. An exterior part for transportation equipment, comprising:
a substrate (1) as a decoration subject; and
the decorative film (100, 100A, 100B) according to any one of claims 1 to 9 located on a surface of the substrate (1).

11. A transportation equipment, comprising:
the exterior part for transportation equipment according to claim 10.

## Patentansprüche

1. Eine dekorative Folie (100, 100A, 100B), die konfiguriert ist, um auf einem Dekorationsobjekt (1) angebracht zu werden, umfasst:
eine Basisschicht (10), die zumindest eine Art von Pigment (11) enthält, das eine Basisfarbe definiert;
die Basisschicht (10) ist konfiguriert, um auf einer Oberfläche des Dekorationsobjekts (1) vorgesehen zu werden, und
zumindest eine transparente Schicht (20, 20A, 20B), wobei sich die Basisschicht (10) zwischen der zumindest einen transparenten Schicht (20, 20A, 20B) und dem Dekorationsobjekt (1) befindet,
wobei die transparente Schicht (20, 20A, 20B) ein glitzerndes Material (21, 23) enthält und ein Unterschied (Δh, Δh') zwischen einem Farbtonwinkel (h1) der Basisfarbe und einem Farbtonwinkel (h2, h3) einer Farbe des glitzernden Materials (21, 23) 60° oder mehr und 142° oder weniger beträgt.

2. Die dekorative Folie (100, 100A, 100B) gemäß Anspruch 1, wobei das glitzernde Material (21, 23) eine durchschnittliche Korngröße von 50 µm oder weniger aufweist.

3. Die dekorative Folie (100, 100A, 100B) gemäß Anspruch 1 oder 2, wobei die transparente Schicht (20, 20A, 20B) das glitzernde Material (21, 23) mit einem Gehalt von 0,05 PHR oder mehr und 3,0 PHR oder weniger enthält.

4. Die dekorative Folie (100, 100A, 100B) gemäß Anspruch 1 oder 2, wobei die transparente Schicht (20, 20A, 20B) das glitzernde Material (21, 23) mit einem Gehalt von 0,3 PHR oder mehr und 1,0 PHR oder weniger enthält.

5. Die dekorative Folie (100A, 100B) gemäß irgendeinem der Ansprüche 1 bis 4, wobei die zumindest eine transparente Schicht zwei transparente Schichten (20A, 20B) enthält.

6. Die dekorative Folie (100A, 100B) gemäß Anspruch 5, wobei die zwei transparenten Schichten (20A, 20B) eine erste transparente Schicht (20A) und eine zweite transparente Schicht (20B) umfassen, die auf der Basisschicht (10) gestapelt sind.

7. Die dekorative Folie (100A) gemäß Anspruch 6, wobei die erste transparente Schicht (20A) das glitzernde Material (21, 23) enthält und sich zwischen der zweiten transparenten Schicht (20B) und der Basisschicht (10) befindet und die zweite transparente Schicht (20B) das glitzernde Material (21, 23) nicht enthält.

8. Die dekorative Folie (100B) gemäß Anspruch 6, wobei die erste transparente Schicht (20A) das glitzernde Material (21, 23) nicht enthält und sich zwischen der zweiten transparenten Schicht (20B) und der Basisschicht (10) befindet und die zweite transparente Schicht (20B) das glitzernde Material (21, 23) enthält.

9. Die dekorative Folie (100, 100A, 100B) gemäß irgendeinem der Ansprüche 1 bis 8, wobei jede der zumindest einen transparenten Schicht (20, 20A, 20B) eine Durchlässigkeit für sichtbares Licht von 10 % oder mehr aufweist.

10. Ein Außenteil für ein Transportausrüstung, das umfasst:
ein Substrat (1) als Dekorationsobjekt; und
die dekorative Folie (100, 100A, 100B) gemäß irgendeinem der Ansprüche 1 bis 9, die sich auf einer Oberfläche des Substrats (1) befindet.

11. Eine Transportausrüstung, die umfasst:
das Außenteil für eine Transportausrüstung gemäß Anspruch 10.

## Revendications

1. Film décoratif (100, 100A, 100B) configuré pour être disposé sur un sujet de décoration (1), comprenant :
une couche de base (10) contenant au moins un type de pigment (11) définissant une couleur de base,
la couche de base (10) est configurée pour être disposée sur une surface du sujet de décoration (1), et
au moins une couche transparente (20, 20A, 20B), la couche de base (10) étant située entre la ou les couches transparentes (20, 20A, 20B) et le sujet de décoration (1),
où la couche transparente (20, 20A, 20B) contient un matériau pailleté (21, 23) et où la différence (Δh, Δh') entre l'angle de nuance (h1) de la couleur de base et l'angle de nuance (h2, h3) d'une couleur du matériau pailleté (21, 23) vaut 60 ° ou plus et 142 ° ou moins.

2. Film décoratif (100, 100A, 100B) selon la revendication 1, dans lequel le matériau pailleté (21, 23) présentent une taille de grains moyennes de 50µm ou plus courte.

3. Film décoratif (100, 100A, 100B) selon la revendication 1 ou la revendication 2, dans lequel la couche transparente (20, 20A, 20B) contient le matériau pailleté (21, 23) avec une teneur de 0,05 PHR ou plus et de 3,0 PHR ou moins.

4. Film décoratif (100, 100A, 100B) selon la revendication 1 ou la revendication 2, dans lequel la couche transparente (20, 20A, 20B) contient le matériau pailleté (21, 23) avec une teneur de 0,3 PHR ou plus et de 1,0 PHR ou moins.

5. Film décoratif (100A, 100B) selon l'une quelconque des revendications 1 à 4, dans lequel la ou les couches transparentes incluent deux couches transparentes (20A, 20B) .

6. Film décoratif (100A, 100B) selon la revendication 5, dans lequel les deux couches transparentes (20A, 20B) comprennent une première couche transparente (20A) et une seconde couche transparente (20B) empilées sur la couche de base (10).

7. Film décoratif (100A) selon la revendication 6, dans lequel la première couche transparente (20A) contient le matériau pailleté (21, 23) et est située entre la seconde couche transparente (20B) et la couche de base (10), la seconde couche transparente (20B) ne contient pas de matériau pailleté (21, 23).

8. Film décoratif (100B) selon la revendication 6, dans lequel la première couche transparente (20A) ne contient pas de matériau pailleté (21, 23) et est située entre la seconde couche transparente (20B) et la couche de base (10), la seconde couche transparente (20B) contient le matériau pailleté (21, 23).

9. Film décoratif (100, 100A, 100B) selon l'une quelconque des revendications 1 à 8, dans lequel chacune de la ou des couches transparentes (20, 20A, 20B) présente une transmittance de lumière de 10 % ou plus.

10. Élément extérieur pour un équipement de transport, comprenant :
un substrat (1) utilisé en tant que sujet de décoration, et
le film décoratif (100, 100A, 100B) conforme à l'une quelconque des revendications 1 à 9, situé sur une surface du substrat (1).

11. Équipement de transport comprenant :
l'élément extérieur pour équipement de transport conforme à la revendication 10.
